(19) Europäisches Patentamt
European Patent Office
Office européen des brevets

(11) **EP 3 792 317 B1**

(12) **EUROPEAN PATENT SPECIFICATION**

(45) Date of publication and mention
of the grant of the patent:
**27.09.2023  Bulletin 2023/39**

(21) Application number: **20195492.2**

(22) Date of filing: **10.09.2020**

(51) International Patent Classification (IPC):
***C09D 5/03*** *(2006.01)*

(52) Cooperative Patent Classification (CPC):
**C09D 5/03**

(54) **COMPOSITION FOR SINGLE LAYER POWDER COATING WITH GRADIENT COLOR EFFECT**

ZUSAMMENSETZUNG FÜR EINSCHICHTIGE PULVERBESCHICHTUNG MIT GRADIENTENFARBEFFEKT

COMPOSITION DE REVÊTEMENT EN POUDRE À COUCHE UNIQUE AVEC EFFET DE COULEUR À GRADIENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.09.2019   US 201962899980 P**

(43) Date of publication of application:
**17.03.2021   Bulletin 2021/11**

(73) Proprietor: **Tambour Ltd**
**4059300 Kfar Netter (IL)**

(72) Inventors:
• **BAR-ON, Adva**
**Kfar Netter (IL)**
• **GOLAN, Alon**
**Kfar Netter (IL)**

• **SHITRIT, Mordechay**
**Kfar Netter (IL)**
• **GLIK, Ziva**
**Kfar Netter (IL)**
• **GORELIK, Boris**
**Kfar Netter (IL)**

(74) Representative: **Kasche & Partner**
**Bühlstrasse 1**
**8125 Zollikerberg/Zürich (CH)**

(56) References cited:
**EP-A1- 1 491 593      WO-A1-00/56821**
**WO-A1-01/59018      JP-A- S 548 641**
**JP-A- 2002 155 223    JP-A- 2015 134 889**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Technical Field

The disclosure generally relates to powder coatings and particularly to achieving a gradient effect in a powder coating application.

## Background

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section. Similarly, issues identified with respect to one or more approaches should not assume to have been recognized in any prior art on the basis of this section, unless otherwise indicated.

It is well established for powder coatings that mixing of two colors doesn't result in an intermediate color, but rather a blend of individual particles. While for liquid solvent-based paints mixing, for example, a red paint and a yellow paint will yield an orange paint, with powder coating one can get a unique speckled finish using such straightforward mixing.

As stated in Paint and Coatings Industry (PCI) Magazine, 2017, Is multicolor powder coating possible?, accessed Sep. 2019, {https://www.pcimag.com/blogs/14-pci-blog/post/103839-is-multicolor-powder-coating-possible}, gradient color effects can be achieved by applying one color on part of a target, then covering the rest of it with another color. The intersection of two colors can be quite aesthetically pleasant. Another method, which is used to simulate wood grain is achieved by spraying multiple dry layers of light and dark brown powders, then 'combing' the finish before heating.

PCI Magazine further teaches that physically blending two or more powders would give a speckled finish coating rather than achieve a gradient effect. Thus, mixing an orange, medium brown and dark brown can simulate a rust patina. Blends of large particle textured powder can give the effect one can see on roofing shingles, for example.

JP2015134889A discloses a powder mixed coating material manufactured by dry blending two or more kinds of powder coating materials containing a fluorine resin powder coating material containing a pigment and a polyester resin powder coating material containing a pigment where kinds of the pigment contained in the fluorine resin powder coating material and the pigment contained in the polyester resin powder coating material are different, a volume concentration of the pigment contained in the fluorine resin powder coating material is 5 PVC% or more higher than that in the polyester resin powder coating material and a difference of solubility parameters of a fluorine resin and a polyester resin is 1.0 to 1.5.

EP1491593A1 discloses a process for the manufacture of a powder coating composition comprising, as a binder, at least one saturated or unsaturated semi-crystalline polyester or polyesterurethane A) and, optionally, one or more saturated or unsaturated compounds B) different from A), at least one of which being reactable with the other resins present in the binder.

JP2002155223A discloses a method for color matching of powder coatings comprising combining a group of an achromatic primary colored powder coating and a group of a chromatic primary colored powder coating, and comprising (1) selecting two or more standard coatings suitable for matching to a target color from a group of a standard primary colored powder coating, (2) adjusting, as a chromatic primary colored powder coating, hue by selecting two kinds of primary colored powder coating in which the luminosity value of the target color is between that of the two kinds of the primary colored powder coating from the primary colored powder coating in each subgroup every subgroup to which the chromatic primary colored powder coating selected in the first process belongs, and (3) toning by combination of the primary colored powder coatings selected in (2).

WO0159018A1 discloses a powder coating composition comprising a mixture of first and second component powder coating compositions which are separated in a triboelectric reference series indicative of the extent to which powder coating compositions may be distinguishable from one another when electrically charged.

WO0056821A1 discloses a matting agent for thermally curable systems, especially for powder coating compositions, that comprises at least one carboxyl-containing polymer as binder and at least one epoxy-group-containing compound as cross-linking agent, wherein the matting agent comprises at least the following constituents: (a) a metal salt or a metal complex of an organic compound, the metal being selected from the group magnesium, calcium, strontium, barium, zinc, aluminium, tin and antimony, and (b) a polymerization product of monomers, the monomers including epoxy-group-containing monomers and the epoxy value of the polymerization product being from 0.1 to 8 equivalents of epoxy groups, and overall the ratio of epoxy equivalents of component (b) to metal equivalents of component (a) being from 0.2 to 120.

JPS548641A discloses a metallic powder coating giving effective metallic appearance in in either direct rays of the sun or the shade, which is composed of 2 or more kinds of powder coatings which differ in color tone, and a luster pigment.

## Brief Description of the Drawings

The invention is set out in the appended set of claims. All aspects disclosed herein which are not covered by the appended set of claims are not according to the invention and are present for illustration purposes only. The foregoing and other objects, features and advantages will become apparent and more readily appreciated from the following detailed description taken in conjunction with the accompanying drawings, in which:

Figure 1- is a grayscale photograph of a substrate on which a first coating was applied based on a powder coating prepared according to an embodiment.

Figure 2 - is a grayscale photograph of a substrate on which a second coating was applied based on a powder coating prepared according to an embodiment.

Figure 3 - is a grayscale photograph of a substrate on which a third coating was applied based on a powder coating prepared according to an embodiment.

Figure 4 - is a grayscale photograph of a substrate on which a fourth coating was applied based on a powder coating prepared according to an embodiment.

Figure 5 - is a grayscale photograph of a substrate on which a fifth coating was applied based on a powder coating prepared according to an embodiment.

Figure 6 - is a grayscale photograph of a substrate on which a sixth coating was applied based on a powder coating prepared according to an embodiment.

Figure 7 - is a schematic illustration of a process for producing powder coating, implemented in accordance with an embodiment.

## Detailed Description

The invention is set out in the appended set of claims. All aspects disclosed herein which are not covered by the appended set of claims are not according to the invention and are present for illustration purposes only. Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

It is important to note that the embodiments disclosed herein are only examples of the many advantageous uses of the innovative teachings herein. In general, statements made in the specification of the present application do not necessarily limit any of the various claims. Moreover, some statements may apply to some inventive features but not to others. In general, unless otherwise indicated, singular elements may be in plural and vice versa with no loss of generality. Slight variations above and below the stated ranges specified in this application can be used to achieve substantially similar results as values within the ranges. Also, the disclosure of these ranges is intended as a continuous range including every value between the minimum and maximum values. Some ranges are presented as percentage by weight or by volume. It should be understood that these ranges may be complementary to each other, so that the combination of the percentage by weight of different compounds, for example, does not exceed 100%. If, for example, a combination is presented as 30-70% by weight of a first substance, and 30-70% by weight of a second substance, and in an embodiment there is 40% by weight of the first substance, then it is readily understood that the combination will include no less than 30% by weight of the second substance but no more than 60% by weight, so as not to exceed 100%.

A composition for a dry blend powder coating is disclosed, allowing to create single layer gradient effects. The dry blend powder coating includes a first part of about 40 to 60 % by weight of a polyester resin having carboxylic groups, having a first pigment, and a second part of about 40 to 60% by weight of: a glycidyl-acrylic polymer resin, an acrylic polymer resin having carboxylic groups, or a combination thereof, having a second pigment. The acrylic polymer includes carboxylic groups having an acid value of approximately 40 mgKOH/g, and glycidyl-acrylic resin having an EEW value of approximately 700 g/eq. In an embodiment the polyester resin has an acid value of approximately 30 mgKOH/g.

According to one example a dry blend powder coating includes a first part of 40 to 60 % by weight of a polyester resin having carboxylic groups, having a first pigment; and a second part of 40 to 60 % by weight of: a glycidyl-acrylic polymer resin, or acrylic polymer resin having carboxylic groups, or a combination thereof, having a second pigment; wherein the first part and the second part combined are not more than 100% by weight of the dry blend powder. The first pigment may be discernable from the second pigment by hue.

According to another example the first group may further include a hardener at 5 to 30 % by weight. The second group may further include a hardener at 5 to 30 % by wt. The hardener may be TGIC or HAA, or dodecanedioic acid.

According to yet another example the first part, the second part, or both may further include 30 to 50 % by weight of additives. The additives may be organic fillers, inorganic fillers, processing additives, and colorants. A processing additive may be flowing additives, degassing additives, antioxidants, flame retardants, UV-stabilizers, plasticizers and matting agents. In some examples the additives may be $TiO_2$, ZnS, $BaSO_4$, $CaCO_3$, extenders made of polymeric materials, glass made spheres, and hollow polymer spheres.

In another example the coating may include one or more resins of the first group part and one or more resins of the second part. The acrylic polymer may further include carboxylic groups having an acid value of approximately 40 mgKOH/g. The glycidyl-acrylic polymer resin may have an EEW value of approximately 700 g/eq. The polyester resin may have an acid value of approximately 30 mgKOH/g.

According to another example producing a gradient effect powder for coating includes preparing a first part of 40 to 60% by weight of a polyester resin having carboxylic groups, the first part further comprising a first pigment; preparing a second part of corresponding 40 to 60% by weight of: a glycidyl-acrylic polymer resin, or acrylic polymer resin having carboxylic groups, or a combination thereof, the second further comprising a second pigment; and mixing the first part and the second part to a homogenous mixture wherein the first part and second part combined are not more than 100% by weight of the powder coating.

Gradient color effect for the purpose of this disclosure is construed as a coating which is composed of many domains of different tint and shade, which can be readily distinguished by a normally functioning human eye. Composing coating by domains of different super-molecular structure is known in the art and described for example in U.S. Patent No. 3,842,035, and which teaches using polyesters of substantially different reactivity to make a matte coating having domains made by above polyesters separated during the curing process. Another way to obtain domain structure is an application of blends of immiscible polymers in a powder coating composition. This method is taught for example in U.S. Patent No. 7,547,739, and which describes a compositions of a polyester-carboxyl based resin powder mixed with a glycidyl-acrylic resin powder, which is known to be substantially incompatible with polyesters. Powder coatings made of the aforementioned composition is of very low gloss because it consists of many domains of incompatible polymers having different refractive index. Light scattering on interfacial surface is responsible for very low gloss of coating composed of polyester-based domains and acrylic-based domains. Similar approaches to make domains structures is taught in U.S. Patent No. 6,905,778, and where the effect of low gloss is the result of domain formation by two incompatible polymers, namely an acid functional polyester and a styrene-maleic-anhydride copolymer. Likewise matte coatings comprising of carboxyl-polyurethanes are taught in U.S. Patent No. 5,229,470. However, ratios of components taught in the aforementioned compositions, amounts of reactive groups used in polyesters, glycidyl-acrylates and reacting groups in polyurethane composites do not result in creating domains large enough so as to be distinguishable by a human eye. As a result, dry blends where components colored by substantially different pigments (e.g. dark gray and white) result in coatings having an appearance of a speckled finish or a textured powder coating.

A gradient color effect in powder coating can be achieved by having a powder coating comprising of at least two components having different pigments. For the purpose of this disclosure different pigments can be discerned based on hue, tint, or shade. Difference of color hue can take place in case of different level of homogeneity of a polymer blend formed by mixing two polymers, each having a different color pigment. While mixing in the molten state polymers should create blends with different ratios of components on the surface layers of the coating. Alternatively, polymer components of a dry blend should have limited compatibility and should be prone to separation to form phases which are enriched with one polymer of the mixture. High viscosity and lack of shear after the coating is applied on a surface are responsible for a separation gradient of one polymer phase from another, thus producing a gradient color effect.

A critical aspect for this process to yield the requisite result is a fast separation of polymer phases on the coated surface. A condition for separation of two components is if their free energy ΔG is greater than zero. This is discussed by Lipatov et al. in Thermodynamics of Blends, Vol.1, Y.S.Lipatov, A.E. Nesterov, Technomic Publishing Company Inc., 1997, where ΔG is defined as follows:

$$\Delta G = \Delta H - T\Delta S + E$$

where ΔH is the enthalpy of mixing, T is the temperature, ΔS is the entropy of mixing, and E is the energy of specific interactions.

For polymers ΔH is known to be always greater than zero, therefore ΔS should be kept as low as possible. The main factors in controlling for a low ΔS is high enough molecular weight of blended polymers, an absence of specific interactions (e.g. hydrogen bonds) and fast chemical reactions between blended polymers which can retard the phase separation process. Another requirement is an absence of fast rate curing reactions in each phase to prevent retardation of phase separation due to branching, making polymer viscosity very high.

One possibility to ensure phase separation of two polyesters is to decrease $\Delta S$ during the curing process and decrease hydrogen bond interactions due to chemical reactions of carboxyl groups of polyesters with hardeners. Klaren teaches using two polyesters of different acid value to be compatible prior to curing reaction. However, one component possessing a high acid value has a faster reaction with the hardener to increase molecular weight (decrease $\Delta S$) and disperse hydrogen bonds. The above factors lead to phase separation of two initially compatible polyesters to produce a matte coating due to strong light scattering on the boundaries of separated phases. However, the domain size of the separated phases is too small to be distinguishable by a human eye.

Another possibility to ensure phase separation is to blend polymers of different chemical compositions to have high positive magnitude of $\Delta H$ together with low $\Delta S$ to enhance the phase separation process. This possibility is realized in blends of polyesters with carboxyl groups and glycidyl-functionalized acrylic polymers. Compositions made using a blend prior to extrusion, or dry blend, are in general both viable options to make matte powder coatings due to the phase separation phenomenon between polyester and glycidyl - acrylic polymers. However, again, without precautions allowing fast separation of phases during solidification, coating will result in formation of either micro-domains with strong light scattering or mixed coloration lacking gradient colorations effect detectable by a human eye.

A composition made of immiscible polymers (e.g. polyesters and glycidyl-acrylates) will result in formation of domains enriched either with polyester or acrylic polymer. Domains are of small size (approximately 20 to 30 microns) and can't be distinguished by a human eye. However, the difference in the refractive indexes of the domains are enough to provide light scattering resulting in a coating of matte appearance.

In order to ensure phase separate regions (rather than micro-domains), mixing of incompatible polymers should be limited, to allow relatively easy phase separation which result in large areas enriched with either resin. Different coloration for each resin will make it possible to distinguish color difference between different regions of powder coating. Limited blending of two incompatible polymers in case of powder coating can be achieved via application of dry blend of above polymers onto a substrate to ensure easy phase separation of polymers when their mixing is confined.

Appropriate molecular weights of polyesters and glycidyl acrylates are needed to ensure low compatibility of components (low $\Delta S$), i.e. an amount of carboxyl groups in the polyester resin and oxirane groups of the glycidyl-acrylate which are unable to form strong hydrogen bonds between the carboxylic groups and oxirane groups (low E value). However, molecular weights of polyester and glycidyl acrylates should be low enough (i.e. low viscosity) so as to ensure phase separation of polyester and acrylic phases. Acrylic polymer can contain carboxylic groups instead of oxirane groups but their concentration should not be high, in order to prevent compatibilization of polyester and acrylic polymer due to formation of hydrogen bonds between blended polymers.

Due to kinetic effects in a viscous matrix, phase separation can be partial rather than entire. Thus a dry blend of polyester and acrylic polymers colored by different colors (e.g. pigments) results in a powder coating having an outer appearance including regions of deeper (more shade) and lighter (more tone) colored regions rather than regions of individual colors. For example, if a white pigment is used together with a dark grey pigment, an effect may be achieved which is similar in appearance to concrete. Dry blend components should contain colorants which result in a well distinguished color gradient of different regions of powder coating.

Partially separated polyester and glycidyl acrylate are able to react on interfacial surfaces to provide a coating with appropriate mechanical properties, for example withstanding about 40 inch-pounds. Appropriate mechanical properties may be, for example, the ability to withstand industry standard testing. Both polyester and glycidyl acrylate components of a dry blend can include hardeners. For example, polyester can include TGIC or HAA hardener, while glycidyl acrylate can contain a di-carboxylic acid, e.g. dodecanedioic acid. Where an acrylic polymer with carboxylic groups is used, the component of dry blend based on the above polymer can include TGIC and di-carboxylic acid as well, for example.

Both components of the dry blend may contain different processing aid additives such as flowing additives, degassing additives, antioxidants, flame retardants, UV-stabilizers, matting agents, etc. Both polyester and Acrylic parts of the dry blend can contain plasticizers to increase flexibility of powder coating. For instance, the acrylic part can contain Escat 22 by Estron Chemical.

Both components of the dry blend may contain different fillers like inorganic fillers or organic fillers. For example, $TiO_2$, $ZnS$, $BaSO_4$, $CaCO_3$, extenders made of polymeric materials, glass made spheres, hollow polymer made spheres, etc. may be used.

Each part of the dry blend may include one or more mixed polyesters in one part of the dry blend and one or more mixed glycidyl-polyesters (with carboxylic groups, oxirane groups, or both) in the second part of the dry blend composition. For example, the acrylic part of the dry blend may include a few acrylic polymers with carboxylic groups instead of oxirane groups.

As noted above one part of the dry blend powder coating may contain one or more glycidyl functionalized acrylic resin or methacrylic resins as the principal binder resin with quantities in the range of about 30% to 90% by weight, and in some embodiments about 40 to 70%. Examples of glycidyl functionalized acrylic resins are copolymers such as Isocryl EP570G by Estron Chemical or Alymers AC2102 by INOPOL. The glycidyl-functionalized acrylic or methacrylic resins have an epoxide equivalent weight (EEW) in the range of 200 to 2000 g/eq. and glass transition temperature (Tg) ranging from 30 to 85 C. In an embodiment glycidyl functionalized acrylics with an EEW value in the range of about 500 to 800 and Tg in the range of about 50 to 80 C may be used, for example.

The acrylic binder may contain carboxylic groups instead of oxirane groups with quantities in binder in the range of about 30 to 90%. The acid value (AV) of this acrylic binder can be in the range of about 20 to 120 mgKOH/g. In an embodiment an acrylic polymer with functionalized carboxylic groups having an AV value in the range of about 30 to 95 mgKOH/g may be used. In such embodiments the second part of the dry blend powder coating may contain carboxyl terminated polyester polymer or a mixture of carboxyl terminated polyesters with total quantities in the range of about 30 to 85%, and about 40 to 70% in certain embodiments. The acid value of polyester resin can range from about 10 to 100 mgKOH/g, and in some embodiments in the range of 20 to 40 mgKOH/g. The glass transition temperature of carboxyl terminated resin can range for example from about 35 to 100 C, and in certain embodiments may be in the range of about 50 to 85 C. An example of carboxyl terminated polyester is Alymers PC 2811 by INOPOL. In some embodiments both parts of the dry blend may contain hardeners reacting with chemically active groups of functionalized acrylics and polyesters.

In an embodiment carboxyl terminated polyester binder and carboxylic groups terminated acrylic binder may contain TGIC hardener or HAA hardener such as Primid 522 by EMS-Chemie, for example. The concentration of hardener may be either of the same amount of equivalents as for carboxyl groups of polyester or differ from this amount.

In an embodiment the part of the dry blend containing glycidyl terminated acrylic polymer may further include di-carboxylic or a multi-functional carboxylic acid such as dodecanedioic acid (Cas number 693-23-2), for example. The concentration of carboxylic acid in glycidyl-acrylate binder may be of the same number equivalent as for counter oxirane groups of glycidyl-acrylate binder or different of the equivalent number of carboxyl groups compared to EEW of glycidyl - acrylate.

In an embodiment each part of dry blend includes coloration pigments of different color (e.g. white pigment in one part of the dry blend and gray in the second part of the dry blend). Concentration of coloration pigments in both parts of dry blend may be in the range of about 0.2 to 5%, and in some embodiments ranging from about 0.5 to 2%.

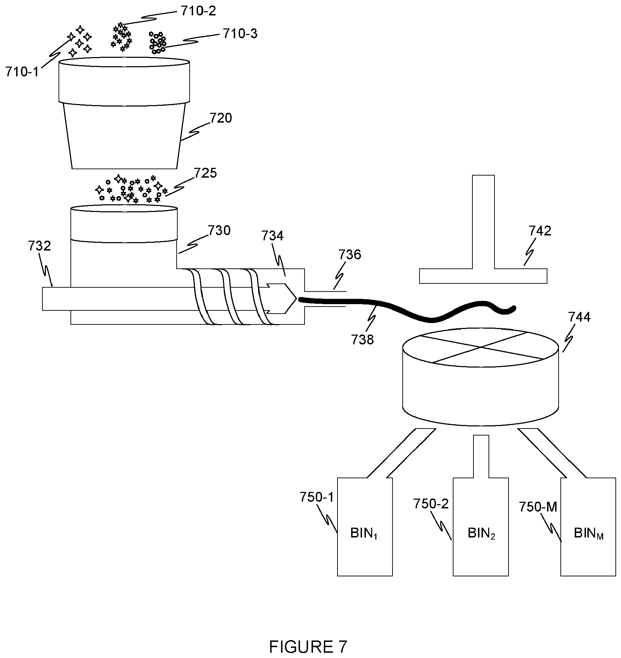

In another embodiment, each part of the dry blend may include: binders, fillers, different additives such as degassing substance, antioxidants, flowing agents, matting agents, glass beads, polymer made hollow spheres, processing additives, matting additives, etc., which are mixed together in an extruder (at temperatures which may be at least about 20 C lower than a temperature at which reaction starts between resins and hardeners). The produced mixture is broken in pieces followed by processing in milling machine to obtain ground powder having particles of mean size in the range of about 20 to 120 microns, and in some embodiments in the range of about 40 to 60 microns, for example. The ground powders of both parts of dry blend are subjected to mixing in a high speed mixing machine to obtain homogeneous powder mixture of homogeneous color. This is discussed in more detail with respect to Fig. 7 below.

The following examples illustrates some of the teachings herein. For each example, powder coating compositions according to invention are prepared according to ingredients presented in the Tables below.

**Example 1 (Comparative)**

**Part A**

| Name | Manufacturer | Type of Component | % |
|------|-------------|-------------------|---|
| Uralac p836* | DSM | Resin | 62 |
| Primid XL522 | EMS | Crosslinker | 3.26 |
| BYK969 | BYK | wax | 1 |
| BYK360 | BYK | Flowing additive | 0.2 |
| Benzoin | Ningbo | Degassing agent | 0.2 |
| TiO2 | Global | Pigment | 7 |
| Red 254 | Neubach | Pigment | 0.246 |
| BlueB2G | Clariant | Pigment | 0.08 |
| Black bb30 | Catay | Pigment | 1.5 |

(continued)

| Name | Manufacturer | Type of Component | % |
|------|--------------|-------------------|---|
| Yellow ys22 | Catay | Pigment | 1.4 |
| Blanc fix n | Solvay | Filler | 23.114 |
| *AV = 18-22 mgKOH/g | | | |

**Part B**

| Name | Manufacturer | Type | % |
|------|--------------|------|---|
| Uralac P878* | DSM | Resin | 61.2 |
| Primid XL 522 | EMS | Crosslinker | 8.8 |
| TiO2 | Global | Pigment | 20 |
| Blanc fix n | Solvay | Filler | 10 |
| *AV= 85-105 mgKOH/g<br>Ratio A/B =50/50 | | | |

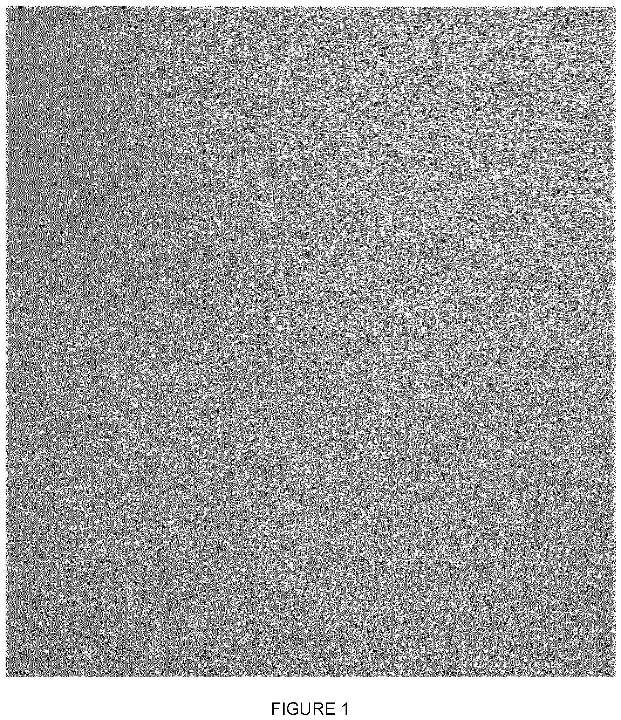

The result of Example 1 is presented in Fig. 1 which is a grayscale photograph of a substrate on which a first coating was applied based on a powder coating prepared according to the tables above. Example 1 (comparative) presents no gradient color effect in the case of mixing two polyesters of different AV intended to produce domains of low size, however those can't be distinguished by a human eye as of having different color hue.

**Example 2**

**Part A**

| Name | Manufacturer | Type of Component | % |
|------|--------------|-------------------|---|
| Uralac p836* | DSM | Resin | 62 |
| Primid XL522 | EMS | Crosslinker | 3.26 |
| BYK969 | BYK | wax | 1 |
| BYK360 | BYK | Flowing additive | 0.2 |
| Benzoin | Ningabo | Degassing agent | 0.2 |
| TiO2 | Global | Pigment | 7 |
| Red 254 | Neubach | Pigment | 0.246 |
| BlueB2G | Clariant | Pigment | 0.08 |
| Black bb30 | Catay | Pigment | 1.5 |
| Yellow ys22 | Catay | Pigment | 1.4 |
| Blanc fix n | Solvay | Filler | 23.114 |
| *AV = 30 mgKOH/g | | | |

**Part B**

| Name | Manufacturer | Type | % |
|---|---|---|---|
| GMA 300* | Worlee | Resin | 70 |
| TiO2 | Global | Pigment | 20 |
| Blanc fix n | Solvay | Filler | 10 |
| EEW = 300 g/eq.<br>Ratio A/B = 50/50 | | | |

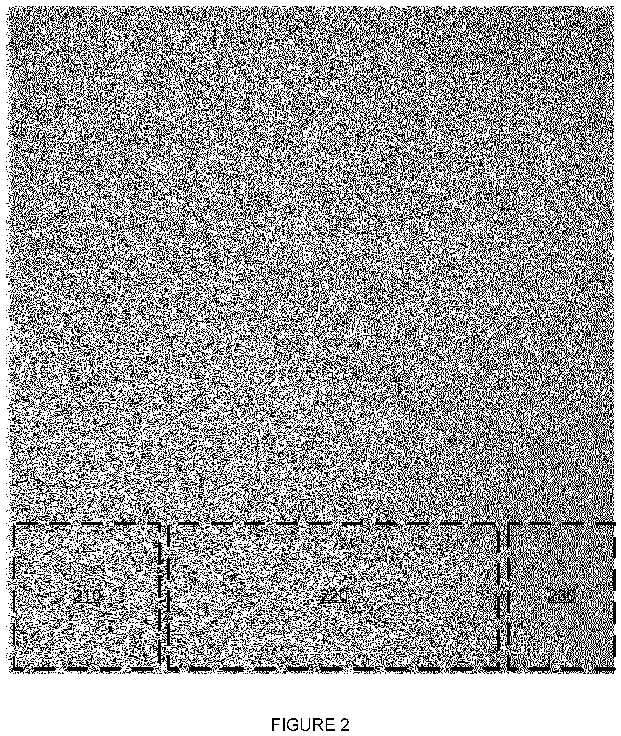

The result of Example 2 is presented in Fig. 2 which is a grayscale photograph of a substrate on which a second coating was applied based on a powder coating prepared according to the tables above. An application of low molecular weight glycidyl acrylate with high reactivity and a plurality of oxirane groups capable of forming hydrogen bonds with carboxylic groups of polyester results in a minor gradient effect. Area 210 has a lighter shade than area 230, with a transition (i.e. gradient) which occurs in area 230.

## Example 3

**Part A**

| Name | Manufacturer | Type of Component | % |
|---|---|---|---|
| Uralac p836* | DSM | Resin | 62 |
| Primid XL522 | EMS | Crosslinker | 3.26 |
| BYK969 | BYK | wax | 1 |
| BYK360 | BYK | Flowing additive | 0.2 |
| Benzoin | Ningabo | Degassing agent | 0.2 |
| TiO2 | Global | Pigment | 7 |
| Red 254 | Neubach | Pigment | 0.246 |
| BlueB2G | Clariant | Pigment | 0.08 |
| Black bb30 | Catay | Pigment | 1.5 |
| Yellow ys22 | Catay | Pigment | 1.4 |
| Blanc fix n | Solvay | Filler | 23.114 |
| *AV = 30 mgKOH/g | | | |

**Part B**

| Name | Manufacturer | Type | % |
|---|---|---|---|
| Isocryl 570 700* | Worlee | Resin | 70 |
| TiO2 | Global | Pigment | 20 |
| Blanc fix n | Solvay | Filler | 10 |
| EEW = 700 g/eq.<br>Ratio A/B = 50/50 | | | |

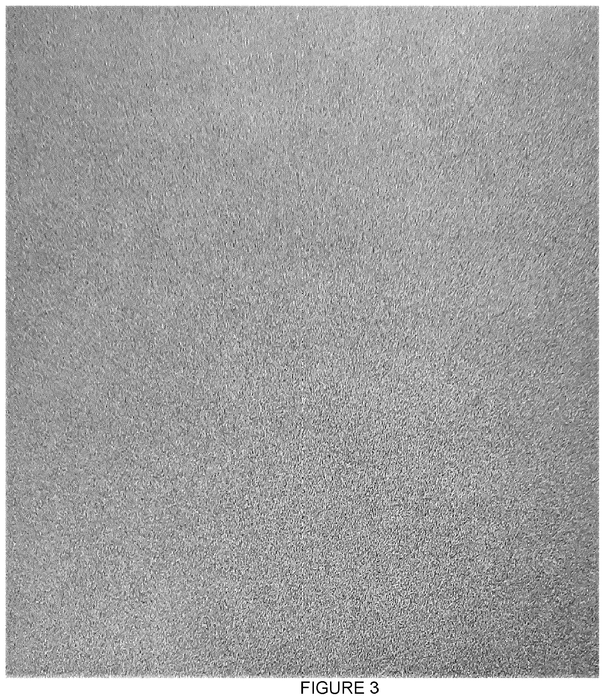

The result of Example 3 is presented in Fig. 3 which is a grayscale photograph of a substrate on which a third coating was applied based on a powder coating prepared according to the tables above. A high level of incompatibility of polyester and acrylic components lead to strong phase separation resulting in a gradient color effect well distinguishable by a human eye.

## Example 4

**Part A**

| Name | Manufacturer | Type of Component | % |
|---|---|---|---|
| Uralac p836* | DSM | Resin | 62 |
| Primid XL522 | EMS | Crosslinker | 3.26 |
| BYK969 | BYK | wax | 1 |
| BYK360 | BYK | Flowing additive | 0.2 |
| Benzoin | Ningabo | Degassing agent | 0.2 |
| TiO2 | Global | Pigment | 7 |
| Red 254 | Neubach | Pigment | 0.246 |
| BlueB2G | Clariant | Pigment | 0.08 |
| Black bb30 | Catay | Pigment | 1.5 |
| Yellow ys22 | Catay | Pigment | 1.4 |
| Blanc fix n | Solvay | Filler | 23.114 |
| *AV = 30 mgKOH/g | | | |

**Part B**

| Name | Manufacturer | Type | % |
|---|---|---|---|
| Isocryl 570* | Worlee | Resin | 70 |
| TiO2 | Global | Pigment | 20 |
| Blanc fix n | Solvay | Filler | 10 |
| EEW = 700 g/eq.<br>Ratio A/B = 60/40 | | | |

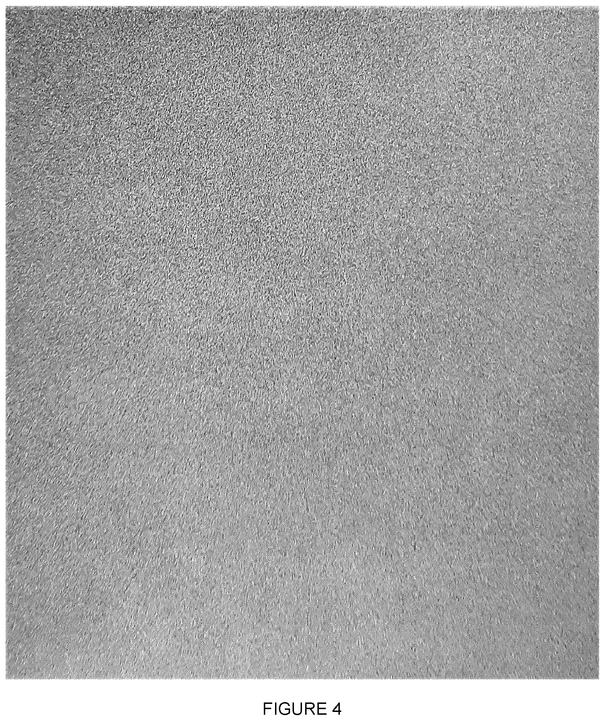

The result of Example 4 is presented in Fig. 4 which is a grayscale photograph of a substrate on which a fourth coating was applied based on a powder coating prepared according to the tables above. A high level of incompatibility of polyester and acrylic components lead to strong phase separation resulting in a gradient color effect well distinguishable by a human eye.

## Example 5

**Part A**

| Name | Manufacturer | Type of Component | % |
|---|---|---|---|
| Uralac p836* | DSM | Resin | 62 |

(continued)

| Name | Manufacturer | Type of Component | % |
|------|------|------|------|
| Primid XL522 | EMS | Crosslinker | 3.26 |
| BYK969 | BYK | wax | 1 |
| BYK360 | BYK | Flowing additive | 0.2 |
| Benzoin | Ningabo | Degassing agent | 0.2 |
| TiO2 | Global | Pigment | 7 |
| Red 254 | Neubach | Pigment | 0.246 |
| BlueB2G | Clariant | Pigment | 0.08 |
| Black bb30 | Catay | Pigment | 1.5 |
| Yellow ys22 | Catay | Pigment | 1.4 |
| Blanc fix n | Solvay | Filler | 23.114 |
| *AV = 30 mgKOH/g | | | |

**Part B**

| Name | Manufacturer | Type | % |
|------|------|------|------|
| Isocryl 570* | Worlee | Resin | 60.13 |
| Dodecanedioic Acid | Sigma-Aldrich | Crosslinker | 9.87 |
| TiO2 | Global | Pigment | 20 |
| Blanc fix n | Solvay | Filler | 10 |
| EEW = 700 g/eq.<br>Ratio A/B =50/50 | | | |

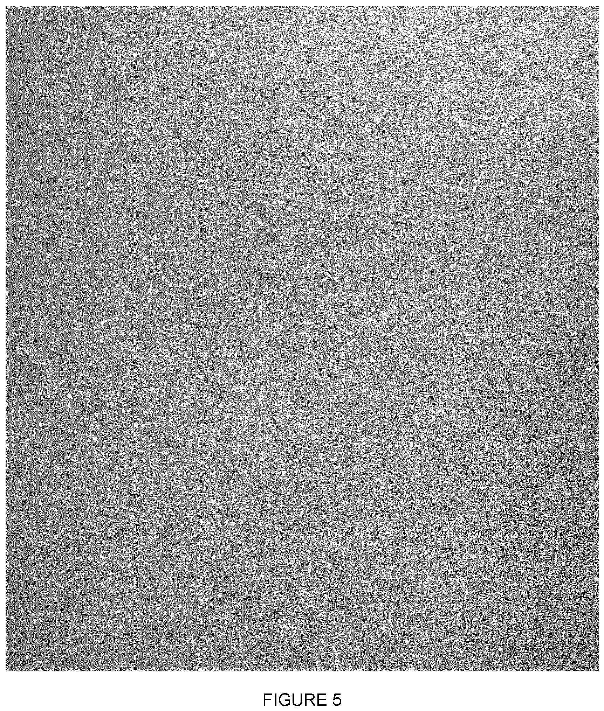

The result of Example 5 is presented in Fig. 5 which is a grayscale photograph of a substrate on which a fifth coating was applied based on a powder coating prepared according to the tables above. A high level of incompatibility of polyester and acrylic components lead to strong phase separation resulting in a gradient color effect well distinguishable by a human eye. Here a glycidyl-acrylic resin is used together with Dodecanedioic Acid as an additional cross linker.

## Example 6

**Part A**

| Name | Manufacturer | Type of Component | % |
|------|------|------|------|
| Uralac p836* | DSM | Resin | 62 |
| Primid XL522 | EMS | Crosslinker | 3.26 |
| BYK969 | BYK | wax | 1 |
| BYK360 | BYK | Flowing additive | 0.2 |
| Benzoin | Ningabo | Degassing agent | 0.2 |
| TiO2 | Global | Pigment | 7 |
| Red 254 | Neubach | Pigment | 0.246 |

(continued)

| Name | Manufacturer | Type of Component | % |
|------|------|------|------|
| BlueB2G | Clariant | Pigment | 0.08 |
| Black bb30 | Catay | Pigment | 1.5 |
| Yellow ys22 | Catay | Pigment | 1.4 |
| Blanc fix n | Solvay | Filler | 23.114 |
| *AV = 30 mgKOH/g | | | |

**Part B**

| Name | Manufacturer | Type | % |
|------|------|------|------|
| Isocryl C78* | Worlee | Resin | 63.28 |
| Primid XL522 | EMS | Crosslinker | 6.72 |
| TiO2 | Global | Pigment | 20 |
| Blanc fix n | Solvay | Filler | 10 |
| *AV = 70 mgKOH/g<br>Ratio A/B = 50/50 | | | |

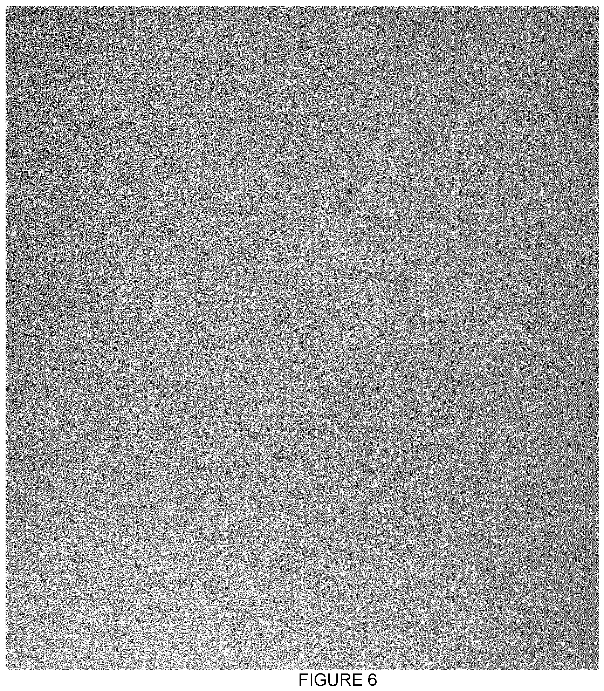

The result of Example 6 is presented in Fig. 6 which is a grayscale photograph of a substrate on which a sixth coating was applied based on a powder coating prepared according to the tables above. A high level of incompatibility of polyester and acrylic components lead to strong phase separation resulting in a gradient color effect well distinguishable by a human eye. Here a carboxylic functionalized acrylic is used instead of a glycidyl-acrylic.

Figure 7 is a schematic illustration of a process for producing powder coating, implemented in accordance with an embodiment. A quantity of first particle type 710-1 is placed in a mixer 720, together with another quantity of a second particle type 710-2 and yet another quantity of a third particle type 710-3. While only 3 particle types are illustrated here, it is readily understood that this is simply to aid in explaining an example, and should not be construed as limiting the disclosure to powders having 3 or less, nor 3 or more, particle types. Rather, any number of suitable particle types may be utilized. For example, the first particle type may be a polyester resin having carboxylic groups, the second particle type may be a pigment, and the third particle type may be a filler. In another example, the first particle may be a glycidyl-acrylic polymer resin, the second particle type may be an acrylic polymer resin, and the third particle type may be a second pigment. The mixer 720 is a machine which agitates or otherwise mechanically mixes the particle types to create a mixture 725 of particles. In an embodiment, the mixture is a dry mixture, containing essentially dry (i.e. solid) particle types.

The mixture 725 is placed into an extruder 730. The extruder 730 includes an extrusion screw 732 which rotates along an axis, causing the mixture 725 to convey through the extrusion pipe 734 and out a nozzle 736, where the diameter of the nozzle is smaller than the diameter of the extrusion pipe 734.

An extrudate 738 exits the nozzle 736 and is crushed between a top plate 742 and bottom plate 744 of a mill. From the mill, crushed particles may be classified into bins 750-1 through 750-M (where 'M' is an integer having a value of '1' or more), each bin corresponding to a particle size, or size range.

Additional Examples:

Example 1 includes a dry blend powder coating comprising: a first part of 40 to 60 % by weight of a polyester resin having carboxylic groups, having a first pigment; and a second part of 40 to 60 % by weight of: a glycidyl-acrylic polymer resin, an acrylic polymer resin, or a combination thereof, having a second pigment.

Example 2 includes the subject matter of example 1 and, optionally, wherein the first pigment is discernable from the second pigment by hue.

Example 3 includes the subject matter of Examples 1 or 2 and, optionally, wherein the first group further comprises a hardener at 5 to 30 % by wt.

Example 4 includes the subject matter of one or more of the Examples 1 to 3 and, optionally, wherein the second group further comprises a hardener at 5 to 30 % by wt.

Example 5 includes the subject matter of Examples 3 or 4 and, optionally, wherein the hardener is any of: TGIC or HAA.

Example 6 includes the subject matter of Example 4 and, optionally, wherein the hardener is dodecanedioic acid.

Example 7 includes the subject matter of any one or more of the Examples 1 to 6 and, optionally, wherein each part further comprises 30 to 50 % by wt of additives.

Example 8 includes the subject of Example 7 and, optionally, wherein the additives are any of: organic fillers, inorganic fillers, processing additives, and colorants.

Example 9 includes the subject matter of Example 8 and, optionally, wherein a processing additive is any of: flowing additives, degassing additives, antioxidants, flame retardants, UV-stabilizers, plasticizers and matting agents.

Example 10 includes the subject matter of Example 8 and, optionally, wherein the additives are any of: TiO2, ZnS, BaSO4, CaCO3, extenders made of polymeric materials, glass made spheres, and hollow polymer spheres.

Example 11 includes the subject matter of any one or more of the Examples 1 to 10 and, optionally, further comprising one or more resins of the first group part and one or more resins of the second part.

Example 12 includes the subject matter of any one or more of the Examples 1 to 11 and, optionally, wherein the acrylic polymer further includes carboxylic groups having an acid value of approximately 40 mgKOH/g.

Example 13 includes the subject matter of any one or more of the Examples 1 to 12 and, optionally, wherein the glycidyl-acrylic polymer resin has an EEW value of approximately 700 g/eq.

Example 14 includes the subject matter of any one or more of the Examples 1 to 13 and, optionally, wherein polyester resin has an acid value of approximately 30 mgKOH/g.

Example 15 pertains to a method for producing gradient effect powder coating, the method comprising: preparing a first part of 40 to 60% by weight of a polyester resin having carboxylic groups, the first part further comprising a first pigment; preparing a second part of corresponding 40 to 60% by weight of: a glycidyl-acrylic polymer resin, or acrylic polymer resin having carboxylic groups, or a combination thereof, the second further comprising a second pigment; and mixing the first part and the second part to a homogenous mixture, resulting in the gradient effect powder coating; wherein the first part and second part combined are not more than 100% by weight of the powder coating.

All examples and conditional language recited herein are intended for pedagogical purposes to aid the reader in understanding the principles of the disclosed embodiment and the concepts contributed by the inventor to furthering the art, and are to be construed as being without limitation to such specifically recited examples and conditions.

Unless otherwise specified, the terms 'about' and/or 'close' with respect to a magnitude or a numerical value may imply to be within an inclusive range of -10% to +10% of the respective magnitude or value.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is important to note that the method is not limited to those diagrams or to the corresponding descriptions. For example, the method may include additional or even fewer processes or operations in comparison to what is shown. In addition, embodiments of the method are not necessarily limited to the chronological order as illustrated and described herein.

## Claims

1. A dry blend powder coating for achieving a gradient color effect comprising:

   a first part of 40 to 60 % by weight of a polyester resin having carboxylic groups, having a first pigment; and
   a second part of 40 to 60 % by weight of: a glycidyl-acrylic polymer resin, or acrylic polymer resin having carboxylic groups, or a combination thereof, having a second pigment;
   wherein the first part and the second part combined are not more than 100% by weight of the dry blend powder, **characterized in that**

the polyester resin has an acid value of 10 to 100 mgKOH/g, optionally 20 to 40 mgKOH/g,
the acrylic polymer resin has an acid value of 20 to 120 mgKOH/g, optionally 30 to 95 mgKOH/g, and
the glycidyl-acrylic polymer resin has an epoxide equivalent weight (EEW) of approximately 700 g/eq..

2. The coating of claim 1, wherein the first pigment is discernable from the second pigment by hue.

3. The coating of any one or more claims 1 to 2, wherein the first group further comprises a hardener at 5 to 30 % by wt.

4. The coating of any one or more claims 1 to 3, wherein the second group further comprises a hardener at 5 to 30 % by wt.

5. The coating of claim 3 or 4, wherein the hardener is any of: TGIC or HAA.

6. The coating of claim 4, wherein the hardener is dodecanedioic acid.

7. The coating of any one or more claims 1 to 6, wherein each part further comprises 30 to 50 % by weight of additives.

8. The coating of claim 7, wherein the additives are any of: organic fillers, inorganic fillers, processing additives, and colorants.

9. The coating of claim 8, wherein a processing additive is any of: flowing additives, degassing additives, antioxidants, flame retardants, UV-stabilizers, plasticizers and matting agents.

10. The coating of claims 8 or 9, wherein the additives are any of: $TiO_2$, $ZnS$, $BaSO_4$, $CaCO_3$, extenders made of polymeric materials, glass made spheres, and hollow polymer spheres.

11. The coating of any one or more claims 1 to 10, comprising one or more resins of the first group part and one or more resins of the second part.

12. The coating of any one or more claims 1 to 11, wherein the acrylic polymer resin has an acid value of approximately 40 mgKOH/g.

13. The coating of any one or more claims 1 to 12, wherein polyester resin has an acid value of approximately 30 mgKOH/g.

14. A method for producing a powder coating for achieving a gradient color effect, the method comprising:

preparing a first part of 40 to 60% by weight of a polyester resin having carboxylic groups, the first part further comprising a first pigment;
preparing a second part of corresponding 40 to 60% by weight of: a glycidyl-acrylic polymer resin, or acrylic polymer resin having carboxylic groups, or a combination thereof, the second part further comprising a second pigment; and
mixing the first part and the second part to a homogenous mixture, resulting in the gradient effect powder coating;
wherein the first part and second part combined are not more than 100% by weight of the powder coating, **characterized in that**
the polyester resin has an acid value of 10 to 100 mgKOH/g, optionally 20 to 40 mgKOH/g,
the acrylic polymer resin has an acid value of 20 to 120 mgKOH/g, optionally 30 to 95 mgKOH/g, and
the glycidyl-acrylic polymer resin has an epoxide equivalent weight (EEW) of approximately 700 g/eq..

**Patentansprüche**

1. Trockenmischung-Pulverbeschichtung zum Erzielen eines Farbübergangseffekts, umfassend:

einen ersten Teil von 40 bis 60 Gew.-% eines Polyesterharzes, das Carboxylgruppen aufweist, ein erstes Pigment aufweisend, und
einen zweiten Teil von 40 bis 60 Gew.-% des Folgenden: eines Glycidylacrylpolymerharzes oder Acrylpolymerharzes, das Carboxylgruppen aufweist, oder einer Mischung davon, ein zweites Pigment aufweisend,
wobei der erste Teil und der zweite Teil kombiniert nicht mehr als 100 Gew.-% des Trockenmischungspulver sind,

**dadurch gekennzeichnet, dass**

das Polyesterharz einen Säurewert von 10 bis 100 mgKOH/g, optional 20 bis 40 mgKOH/g aufweist, das Acylpolymerharz einen Säurewert von 20 bis 120 mgKOH/g, optional 30 bis 95 mgKOH/g aufweist und das Glycidylacrylpolymerharz ein Epoxidäquivalentgewicht (EEW) von ungefähr 700 g/Äq. aufweist.

2. Beschichtung nach Anspruch 1, wobei das erste Pigment von dem zweiten Pigment durch den Farbton unterscheidbar ist.

3. Beschichtung nach einem oder mehreren der Ansprüche 1 bis 2, wobei die erste Gruppe ferner zu 5 bis 30 Gew.-% ein Härtungsmittel umfasst.

4. Beschichtung nach einem oder mehreren der Ansprüche 1 bis 3, wobei die zweite Gruppe ferner zu 5 bis 30 Gew.-% ein Härtungsmittel umfasst.

5. Beschichtung nach Anspruch 3 oder 4, wobei das Härtungsmittel eines von TGIC oder HAA ist.

6. Beschichtung nach Anspruch 4, wobei das Härtungsmittel eine Dodecandisäure ist.

7. Beschichtung nach einem oder mehreren der Ansprüche 1 bis 6, wobei jeder Teil ferner 30 bis 50 Gew.-% Additive umfasst.

8. Beschichtung nach Anspruch 7, wobei die Additive beliebige des Folgenden sind: organische Füllstoffe, anorganische Füllstoffe, Verarbeitungsadditive und Farbstoffe.

9. Beschichtung nach Anspruch 8, wobei ein Verarbeitungsadditiv ein beliebiges des Folgenden ist: Flussmittel, Entgasungsadditive, Antioxidantien, Flammschutzmittel, UV-Stabilisatoren, Weichmacher und Mattierungsmittel.

10. Beschichtung nach Anspruch 8 oder 9, wobei die Additive beliebige des Folgenden sind: $TiO_2$, $ZnS$, $BaSO_4$, $CaCO_3$, Streckmittel, die aus Polymermaterialien, aus Glas hergestellten Kugeln und Polymerhohlkugeln bestehen.

11. Beschichtung nach einem oder mehreren Ansprüchen 1 bis 10, ein oder mehrere Harze des ersten Gruppenteils und ein oder mehrere Harze des zweiten Teils umfassend.

12. Beschichtung nach einem oder mehreren Ansprüchen 1 bis 11, wobei das Acrylpolymerharz einen Säurewert von ungefähr 40 mgKOH/g aufweist

13. Beschichtung nach einem oder mehreren der Ansprüche 1 bis 12, wobei das Polyesterharz einen Säurewert von ungefähr 30 mgKOH/g aufweist.

14. Verfahren zum Produzieren einer Pulverbeschichtung zum Erzielen eines Farbübergangseffekts, wobei das Verfahren Folgendes umfasst:

Herstellen eines ersten Teils von 40 bis 60 Gew.-% eines Polyesterharzes, das Carboxylgruppen aufweist, wobei der erste Teil ferner ein erstes Pigment umfasst,
Herstellen eines zweiten Teils von 40 bis 60 Gew.-% des Folgenden: Glycidylacrylpolymerharzes oder Acrylpolymerharzes, das Carboxylgruppen aufweist, oder einer Mischung davon, wobei der zweite Teil ferner ein zweites Pigment umfasst, und
Mischen des ersten Teils und des zweiten Teils zu einer homogenen Mischung, was die Übergangseffekt-Pulverbeschichtung ergibt,
wobei der erste Teil und der zweite Teil kombiniert nicht mehr als 100 Gew.-% der Pulverbeschichtung sind,
**dadurch gekennzeichnet, dass**
das Polyesterharz einen Säurewert von 10 bis 100 mgKOH/g, optional 20 bis 40 mgKOH/g aufweist, das Acylpolymerharz einen Säurewert von 20 bis 120 mgKOH/g, optional 30 bis 95 mgKOH/g aufweist, und
das Glycidylacrylpolymerharz ein Epoxidäquivalentgewicht (EEW) von ungefähr 700 g/Äq. aufweist.

**EP 3 792 317 B1**

**Revendications**

1. Revêtement en poudre de mélange sec permettant d'obtenir un effet de gradient de couleur comprenant:

   une première partie de 40 à 60% en poids d'une résine de polyester dotée de groupes carboxyliques, présentant un premier pigment ; et
   une deuxième partie de 40 à 60% en poids de: une résine polymère acrylique-glycidyle ou une résine polymère acrylique présentant des groupes carboxyliques, ou une combinaison de celles-ci, présentant un deuxième pigment;
   dans lequel la première partie et la deuxième partie combinées ne représentent pas plus de 100% en poids de la poudre de mélange sec,
   **caractérisé en ce que**
   la résine de polyester présente une valeur acide de 10 à 100 mgKOH/g, facultativement de 20 à 40 mgKOH/g, la résine polymère acrylique présente une valeur acide de 20 à 120 mgKOH/g, facultativement de 30 à 95 mgKOH/g, et
   la résine polymère acrylique-glycidyle présente un poids équivalent époxydique (EEW) d'approximativement 700 g/éq..

2. Revêtement selon la revendication 1, dans lequel le premier pigment se distingue du deuxième pigment par sa teinte.

3. Revêtement selon l'une quelconque des revendications 1 à 2, dans lequel le premier groupe comprend en outre un durcisseur pour 5 à 30 % en poids.

4. Revêtement selon l'une quelconque des revendications1 à 3, dans lequel le deuxième groupe comprend en outre un durcisseur pour 5 à 30% en poids.

5. Revêtement selon la revendication 3 ou 4, dans lequel le durcisseur est n'importe lequel parmi : le TGIC ou le HAA.

6. Revêtement selon la revendication 4, dans lequel le durcisseur est de l'acide dodécanedioïque.

7. Revêtement selon l'une quelconque ou plusieurs des revendications 1 à 6, dans lequel chaque partie comprend en outre 30 à 50% en poids d'additifs.

8. Revêtement selon la revendication 7, dans lequel les additifs sont l'un quelconque parmi des charges organiques, des charges inorganiques, des additifs de traitement et des colorants.

9. Revêtement selon la revendication 8, dans lequel un additif de traitement est l'un quelconque parmi des additifs d'écoulement, des additifs de dégazage, des anti-oxydants, des retardateurs de flammes, des stabilisateurs UV, des plastifiants et des agents de matité.

10. Revêtement selon la revendication 8 ou 9, dans lequel les additifs sont l'un quelconque parmi le $TiO_2$, le ZnS, le $BaSO_4$, le $CaCO_3$, des adjuvants réalisés en matériaux polymères, des billes en verre, et des billes de polymère creuses.

11. Revêtement selon l'une quelconque ou plusieurs des revendications 1 à 10, comprenant une ou plusieurs résines de la première partie de groupe et une ou plusieurs résines de la deuxième partie.

12. Revêtement selon l'une quelconque des revendications 1 à 11, dans lequel la résine polymère acrylique présente une valeur acide d'approximativement 40 mgKOH/g.

13. Revêtement selon une ou plusieurs des revendications 1 à 12, dans lequel la résine de polyester présente une valeur acide d'approximativement 30 mgKOH/g.

14. Procédé de production d'un revêtement en poudre permettant d'obtenir un effet de gradient de couleur, le procédé comprenant:

    la préparation d'une première partie de 40 à 60 % en poids d'une résine de polyester présentant des groupes carboxyliques, la première partie comprenant en outre un premier pigment;

**15**

la préparation d'une deuxième partie correspondant à 40 à 60 % en poids de: une résine polymère acrylique-glycidyle ou une résine polymère acrylique présentant des groupes carboxyliques, ou une combinaison de celles-ci, la deuxième partie présentant un deuxième pigment ; et

le mélange de la première partie et de la deuxième partie en un mélange homogène, ce qui donne le revêtement en poudre à effet gradient ;

dans lequel la première partie et la deuxième partie combinées ne représentent pas plus de 100% en poids du revêtement en poudre,

**caractérisé en ce que**

la résine de polyester présente une valeur acide de 10 à 100 mgKOH/g, facultativement de 20 à 40 mgKOH/g, la résine polymère acrylique présente une valeur acide de 20 à 120 mgKOH/g, facultativement de 30 à 95 mgKOH/g, et

la résine polymère acrylique-glycidyle présente un poids équivalent époxydique (EEW) d'approximativement 700 g/éq..

FIGURE 1

FIGURE 2

FIGURE 3

FIGURE 4

FIGURE 5

FIGURE 6

FIGURE 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2015134889 A
- EP 1491593 A1
- JP 2002155223 A
- WO 0159018 A1
- WO 0056821 A1
- JP S548641 A
- US 3842035 A
- US 7547739 B
- US 6905778 B
- US 5229470 A

### Non-patent literature cited in the description

- Is multicolor powder coating possible?. *Paint and Coatings Industry (PCI) Magazine,* 2017, https://www.pcim-ag.com/blogs/14-pci-blog/post/103839-is-multi-color-powder-coating-possible
- **LIPATOV ; Y.S.LIPATOV ; A.E. NESTEROV et al.** Thermodynamics of Blends. Technomic Publishing Company Inc, 1997, vol. 1
- *CHEMICAL ABSTRACTS,* 693-23-2